# EUROPEAN PATENT SPECIFICATION

(11) **EP 1 896 343 B1**
(45) Date of publication and mention of the grant of the patent: **09.09.2009**
(21) Application number: 05805051.9
(22) Date of filing: 09.09.2005
(51) Int. Cl.: B65D 81/34

(54) **FLEXIBLE CONTAINER WITH INTERNAL HEAT EXCHANGE SYSTEM**
FLEXIBLER BEHÄLTER MIT INNEREM WÄRMEAUSTAUSCHSYSTEM
RÉCIPIENT SOUPLE DOTÉ D UN SYSTÈME D ÉCHANGE THERMIQUE INTERNE

(30) Priority: 27.06.2005 CH 10812005
(43) Date of publication of application: 12.03.2008
(73) Proprietor: Sarcinella, Giuseppe, 6595 Riazzino (CH)
(72) Inventor: Sarcinella, Giuseppe, 6595 Riazzino (CH)
(74) Representative: Cronin, Brian Harold John
(86) International application number: PCT/IB2005/002867
(87) International publication number: WO 2007/000626

(56) References cited:
- FR-A- 2 666 311
- FR-A- 2 847 241
- US-A1- 2001 001 196
- US-B1- 6 267 110
- US-B1- 6 484 514

## Description

The present invention concerns the food, chemical, building and pharmaceutical industry. More particularly, it relates to the sectors which deal with the preparation of flexible containers inside which a substance to be consumed, or in any case to be used, mixed with a liquid contained inside a first compartment, is cooled or heated to a desired temperature by the endothermic or exothermic chemical reaction produced by a reagent substance when it comes into contact with a liquid (usually water) contained inside a second compartment adjacent to the first one. Document FR 2847241 discloses a rigid container having all the technical features of the container of present claim 1, with the exception that the container of claim 1 is flexible.

The abovementioned reagent substance is contained inside a reservoir immersed in the second compartment containing the said liquid and is able to be released from the said reservoir and enter into the compartment itself when the reservoir is subject to a pressure or pulling force sufficient to cause opening of a sealing member with a predefined pressure resistance mounted on one of the walls or on one of the partitions which separate the reservoir from the surrounding compartment containing the said liquid. In order to cause, for example, a cooling of the substance to be used, frequently sodium thiosulphate is employed as a reagent substance or calcium chloride is employed for heating purposes.

The present procedure described above involves, however, a considerable drawback in that the substance to be consumed or to be otherwise used is conserved inside the container, already dissolved (if it is solid or in powder form) or diluted (if it is liquid) in the liquid contained inside the abovementioned first compartment and, with the passing of time, it reacts with the gases and/or the salts dissolved in the liquid itself, gradually deteriorating.

This results in a relatively short shelf-life for the substance in question and a gradual deterioration of its chemical, biochemical and/or organoleptic properties.

In order to overcome this major drawback, the inventor of the subject of the present invention has devised a flexible container according to claim 1, in which the substance to be used is contained inside a second reservoir, inserted inside the already described second compartment, the latter usually containing the liquid medium in which the said substance must be dissolved or diluted. The abovementioned reservoir communicates with the second compartment surrounding it by means of a second sealing member with a predefined pressure resistance.

Exerting externally on the second reservoir a pressure sufficient to cause opening of the said second sealing member causes the substance to be used to be introduced into the liquid contained inside the second compartment, so that it is diluted or dissolved therein.

When a pressure is then exerted on the first reservoir containing the reagent substance, the latter is introduced via the first sealing member into the liquid contained inside the first compartment, which surrounds at least partially the first reservoir, and causes the already described exothermic or endothermic chemical reaction. The heat or cold produced by this reaction is then transmitted to the substance to be used, which is dissolved or diluted in the respective liquid medium, via the surface of the walls which separate the first compartment from the second compartment. In order to obtain an efficient heat exchange, it is advantageous to form the first compartment so that it is surrounded by the second compartment, in order to increase the surface area by means of which the heat exchange occurs. The mixing of the products may occur also by means of a single pressure which will open both the valves.

Using the container according to the invention, the desired result is obtained, namely that of keeping the substance to be used separate from the liquid in which it must be dissolved or diluted, until the moment of use.

The subject of the present invention therefore consists in a flexible container as described in the accompanying Claim 1.

A more detailed description of a preferred example of embodiment of the container according to the invention will now be provided, with reference also to the accompanying drawings in which:
- Figure 1 is a schematic front view of a flexible container designed in accordance with the present state of the art;
- Figure 2 is a schematic front view of the said example of embodiment of a flexible container designed in accordance with the invention;
- Figure 3 is a plan view of the container shown in Figure 2.

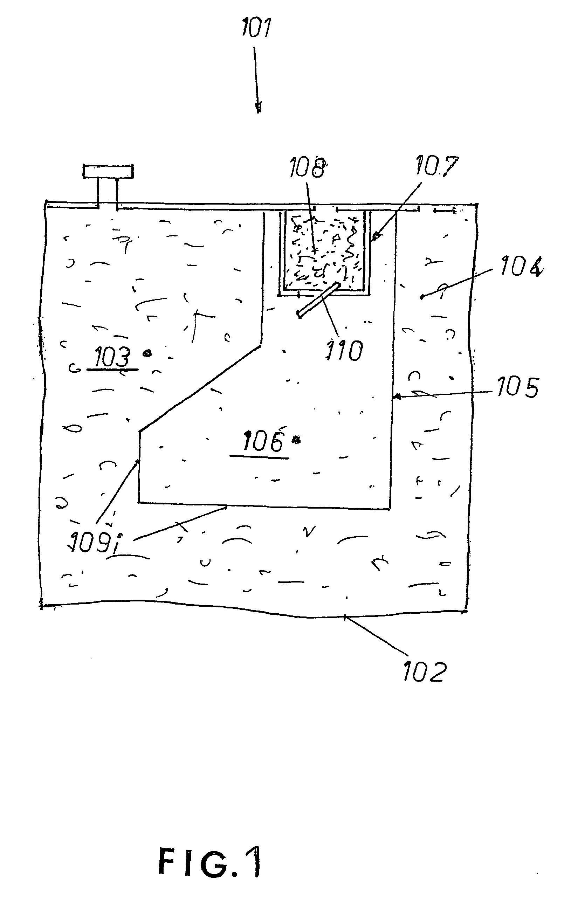

If we consider firstly Figure 1, this shows a container 101 according to the present state of the art.

It comprises a reservoir 107 containing a reagent substance 108 and communicating with a first compartment 105 containing a liquid 106 via a sealing member 110 with a predefined pressure resistance.

The abovementioned first compartment 105 is surrounded by a second compartment 102 containing the substance 103 to be used already dissolved or diluted in the respective liquid.

Exerting a pressure of predefined magnitude on the reservoir 107 causes the reagent substance 108 to flow out into the first compartment 105 where it is mixed with the liquid 106, producing an endothermic or exothermic chemical reaction, the thermal effects of which are transmitted to the substance to be used 103 via the walls 109i which separate the first compartment 105 from the second compartment 102.

It is evident that, in order for the container 101 to perform its functions, the substance 103 to be used must be already mixed or diluted in its liquid medium, and this results in the drawbacks already described in connection with the duration of the shelf-life of the substance 103 itself.

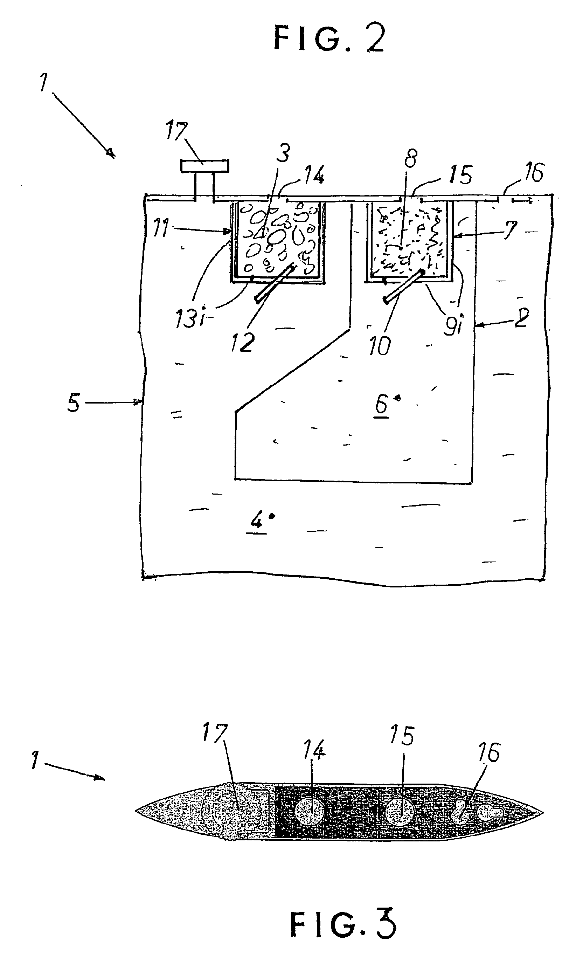

If we consider Figures 2 and 3, on the other hand, in them it can be seen how a flexible container 1 according to the invention has, inside it, a first reservoir 7 and a second reservoir 11 inside which, respectively, a reagent substance 8 of the type described above and a substance 3 to be used are contained.

The said reservoirs 7, 11 are formed or mounted respectively inside a first compartment 2 and a second compartment 5 containing, respectively, the liquid 6 which must be combined with the reagent substance 8 and the liquid medium 4 in which the substance 3 to be used must be dissolved or diluted.

Both the first reservoir 7 and the second reservoir 11 are separated from the respective compartments 2, 5 by means of at least one wall and/or a partition 9i, 13i on each of which a first sealing member 10 and a second sealing member 12 with a predefined pressure resistance are mounted. (These members, which are of a known type, are shown only schematically in the drawings).

In order to use the container 1 according to the invention in the most practical and functional manner, it is sufficient firstly to compress the second reservoir 11, mixing or diluting the substance 3 stored therein with the liquid medium 4 contained in the respective second compartment 5, and then compress the first reservoir 7, causing mixing of the reagent substance 8 with the liquid 6 contained in the said first compartment 2. This produces, inside the latter, the cold or heat required to cool or heat to a predefined temperature the substance 3 to be used, mixed with its liquid medium 4, and heat exchange occurs via the walls which separate the first compartment 2 from the second compartment 5.

Mixing of the product may also occur by means of a single pressure which will open both the valves.

The desired effect is thus achieved, namely that of keeping the substance 3 to be used separate from its liquid medium 4 until the moment of use.

Hitherto reference has been made generically to a "liquid medium" in that, depending on the nature of the substance 3 to be used, its contents may vary. It may for example contain sodium chloride or other salts, a sweetener, etc.

Each of the two compartments 2, 5, as well as each of the reservoirs 7, 11, communicates with the exterior via means of the known type, such as one-way valves 14, 15, 16 and/or openings 17 with a closing stopper, as shown in Figure 3, used to perform filling thereof.

## Claims

1. Flexible container (1) comprising a first compartment (2) containing inside it liquid (6) in which a first reservoir (7) containing a reagent substance (8) is immersed and separated from the said liquid (6) by means of partitions (9i) or walls provided with at least one sealing member (10) having a predefined pressure resistance, and a second compartment (5) containing a substance (3) to be used, which is diluted or dissolved in a liquid medium (4), wherein said substance (3) to be used is contained inside a second reservoir (11) immersed at least partly inside the said liquid medium (4) contained in the abovementioned second compartment (5) and communicating with the latter via at least one second sealing member (12) with a predefined pressure resistance, mounted on the walls (13i) of the second reservoir (11).

## Patentansprüche

1. Flexibler Behälter (1), der ein erstes Abteil (2) enthält, das eine Flüssigkeit (6) innen behält, in der ein erster Speicher (7) eingetaucht ist, der einen Reagensmittel (8) behält, und von der genannten Flüssigkeit (6) durch Schotte (9i) oder Wände getrennt ist, die mindestens mit einem Dichtungslied (10) mit einen vorbestimmten Druckwiderstand ausgerüstet werden, und ein zweites Abteil (5), das einen Gebrauchstoff (3) behält, der in einem flüssigen Mittel (4) verdünnt oder gelöst wird, wo der genannten Gebrauchstoff (3) in einem zweiten Speicher (11) behalten wird, der mindestens teilweise in dem genannten flüssigen Mittel (4) eingetaucht ist, der in dem obengenannten zweiten Abteil (5) behalten ist, und mit diesem letzten durch einem zweiten Dichtungsglied (12) mit einen vorbestimmten Druckwiderstand in Verbindung ist, der auf dem Schott (13i) des zweiten Speicher (11) angebaut wird.

## Revendications

1. Récipient souple (1) comprenant un premier compartiment (2), qui contient dedans un liquide (6), dans lequel un premier réservoir (7), contenant une substance réactive (8), est immergé et séparé du dit liquide (6) par des cloisons (9i) ou parois pourvus au moins d'un membre scellant (10) ayant une résistance prédéfinie à la pressure, et un deuxième compartiment (5) qui contient une substance (3) à utiliser, qui est diluée ou dissoute dans un moyen liquide (4), où la dite substance (3) à utiliser est contenue dans un deuxième réservoir (11) immergé au moins en part dans le dit moyen liquide (4) contenu dans le susdit deuxième compartiment (5) et communiquant avec ce dernier par moyen au moins d'un deuxième membre scellant (12) avec une résistance à la pressure prédéfinie, monté sur la paroi (13i) du deuxième réservoir (11).
